# EUROPÄISCHE PATENTSCHRIFT

(11) **EP 1 526 990 B1**
(45) Veröffentlichungstag und Bekanntmachung des Hinweises auf die Patenterteilung: **19.05.2010**
(21) Anmeldenummer: 03724829.1
(22) Anmeldetag: 11.03.2003
(51) Int. Cl.: B60R 21/01

(54) **VORRICHTUNG ZUR ERKENNUNG EINES PFAHLCRASHES**
DEVICE FOR RECOGNITION OF A POLE CRASH
DISPOSITIF DE D TECTION DE COLLISION AVEC UN POTEAU

(30) Priorität: 01.08.2002 DE 10235164
(43) Veröffentlichungstag der Anmeldung: 04.05.2005
(73) Patentinhaber: ROBERT BOSCH GMBH, 70442 Stuttgart (DE)
(72) Erfinder: ROELLEKE, Michael, 71229 Leonberg-Hoefingen (DE); THEISEN, Marc, 64295 Darmstadt (DE)
(86) Internationale Anmeldenummer: PCT/DE2003/000765
(87) Internationale Veröffentlichungsnummer: WO 2004/018264

(56) Entgegenhaltungen:
- WO-A-01/81123
- GB-A- 2 330 935

## Beschreibung

### Stand der Technik

Die Erfindung geht aus von einer Vorrichtung zur Erkennung eines Pfahlcrashes nach der Gattung des unabhängigen Patentanspruchs.

Aus GB 2330935 A1 ist eine Vorrichtung zur Erkennung verschiedener Zusammenstoßarten bekannt. Als Sensor sind sowohl Radar- wie Ultraschallsensoren vorgesehen.

Aus WO 01/81123 A1 ist eine Vorrichtung bekannt, bei der in Abhängigkeit von der Aufprallgeschwindigkeit und einem Beschleunigungssignal ein Pfahlcrash erkannt wird und in Abhängigkeit davon dann Personenschutzmittel angesteuert werden.

WO 01/81123 A1 offenbart eine Vorrichtung mit den Merkmalen des Oberbegriffs des Anspruchs 1.

### Vorteile der Erfindung

Die erfindungsgemäße Vorrichtung zur Erkennung eines Pfahlcrashes mit den Merkmalen eines unabhängigen Patentanspruchs hat den Vorteil, dass es mittels der erfindungsgemäßen Vorrichtung möglich ist, Pfahlcrashes besser zu identifizieren. Unter einem Pfahlcrash soll hier im allgemeinen ein Crash mit einem räumlich kleinen Objekt verstanden werden, wobei die zur Crashenergieaufnahme bereitstehenden Strukturen nicht getroffen werden. Dazu zählen Pfähle, Masten und Mäuerkanten. Pfahlcrashes haben die Eigenschaft, dass sie in der Anfangsphase sehr geringe Verzögerungswerte aufweisen. Die Erfindung baut darauf auf, dass aufgrund der geringen Aufprallfläche und des Nichtreffens der zur Crashenergieaufnahme ausgebildeten Fahrzeugstrukturen, das sind typischerweise die Längsträger bis zum Stoßfänger, zunächst nur wenig Energie abgebaut wird und dass der Pfahl schon bei geringen Aufprallgeschwindigkeiten tief in die Fahrzeugfront eindringt. Eine starke Verzögerung tritt erst dann auf, wenn der Pfahl den Motorblock trifft. Die Verzögerung ist dann wesentlich stärker als diejenige bei schnelleren Crashs auf eine weichere Barriere und die Verzögerung ist dann so stark, dass eine Auslösung der Rückhaltemittel zum Schutz der Insassen notwendig ist. Damit wird eine Verwechslung der beiden Crasharten vermieden.

Da die Aufprallgeschwindigkeit und die Distanz zwischen dem ersten Kontaktpunkt, d.h. der Stoßstange, und dem Motorblock bekannt ist, kann die Zeitdauer bis zum ersten Auftreten der hohen Verzögerungswerte berechnet werden. Dies erlaubt ein sicheres Erkennen von Pfahlcrashs und damit eine präzise Steuerung der Rückhaltemittel.

Die Zeit zwischen dem ersten Auftreffen des Aufprallobjekts auf das Fahrzeug und dem Auftreffen des Aufprallobjekts auf den Motorblock wird gemessen. Dies wird anhand der Aufprallgeschwindigkeit und/oder der Beschleunigung bestimmt. Daraus kann dann ein Pfahlcrash identifiziert werden.

Durch die in den abhängigen Ansprüchen aufgeführten Maßnahmen und Weiterbildungen sind vorteilhafte Verbesserungen der im unabhängigen Patentanspruch angegebenen Vorrichtung zur Erkennung eines Pfahlcrashs möglich. Der Umfeldsensor ist entweder als Radarsensor oder als Ultraschallsensor ausgebildet.

### Zeichnung

Ausführungsbeispiele der Erfindung sind in der Zeichnung dargestellt und werden in der nachfolgenden Beschreibung näher erläutert. Es zeigen Figur 1 ein Blockschaltbild der erfindungsgemäßen Vorrichtung, Figur 2 ein Diagramm zur Erläuterung eines Pfahlcrashs und Figur 3 ein Flussdiagramm des erfindungsgemäßen Verfahrens.

### Beschreibung

Pfahlcrashs sind solche Crashs, die ein Aufprallobjekt, das zunächst bei einem Aufprall das Fahrzeug nur zu einer geringen Verzögerung veranlasst, mit geringer Fläche mit sich bringt. Das Beschleunigungssignal dieser Crashs entspricht in der Anfangsphase dem von schnelleren Crashs auf weiche deformierbare Barrieren, beispielsweise von einem Fahrzeug-Fahrzeug-Crash. In einigen Fällen sind die Beschleunigungswerte sogar geringer. Dabei wird aber gefordert, dass der Airbag oder andere Rückhaltemittel bei den Crashs auf sehr weiche Barrieren nicht auslösen, aber bei Pfahlcrashs auslösen müssen.

Erfindungsgemäß wird nun der Prozessor im Steuergerät, der die Sensorsignale von einem Sensor zur Erfassung der Aufprallgeschwindigkeit und/oder einem Sensor zur Erfassung der Beschleunigung auswertet, derart konfiguriert, dass der Prozessor einen

Pfahlcrash besser identifizieren kann. Dies wird dadurch ermöglicht, dass die Zeit zwischen dem ersten Auftreffen des Aufprallobjekts auf das Fahrzeug und dem Auftreffen des Aufprallobjekts auf den Motorblock gemessen wird. Aus dieser Zeit ist ein Pfahlcrash durch Signalanalyse gut identifizierbar.

Unter Aufprallobjekt wird hier jedes Objekt verstanden, das mit dem Fahrzeug, in dem sich die erfindungsgemäße Vorrichtung zur Erkennung eines Pfahlcrashes befindet, kollidiert. Dabei wird hier in der Anmeldung klassischerweise ein Pfahl darunter verstanden. Es kann jedoch auch jedes andere Objekt sein, das zu einem solchen Pfahlcrash führt.

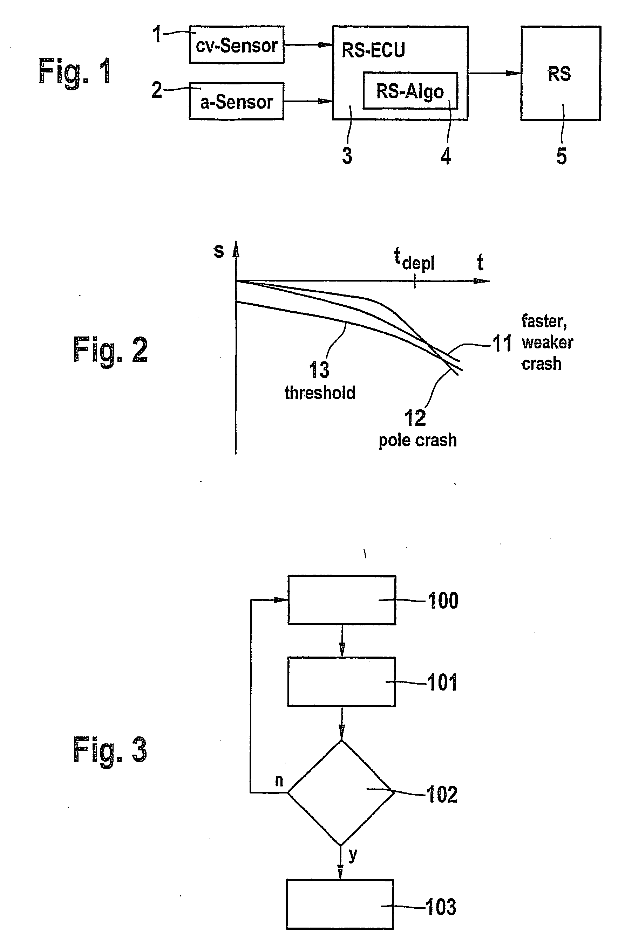

Figur 1 zeigt die erfindungsgemäße Vorrichtung als Blockschaltbild. Ein Umfeldsensor 1 ist an ein Steuergerät 3 über einen ersten Dateneingang angeschlossen. Weiterhin ist ein Beschleunigungssensor 2 an das Steuergerät 3 an einen zweiten Dateneingang angeschlossen. Im Steuergerät 3 ist ein Prozessor 4 angeordnet, auf dem ein Algorithmus abläuft, der zur Erkennung eines Pfahlcrashes dient. Es ist möglich, dass neben diesem Algorithmus noch weitere Algorithmen ablaufen, um entsprechende Crasharten zu identifizieren, um so eine angepasste Auslösung von Rückhaltemitteln zu ermöglichen. Über einen Datenausgang ist das Steuergerät 3 mit Rückhaltemitteln 5 verbunden. Diese Rückhaltemittel 5 sind beispielsweise Airbags und/oder Gurtstraffer und/oder ein Überrollbügel. Die Ansteuerung für die Rückhaltemittel 5 kann im Steuergerät 3 angeordnet oder aber auch den Rückhaltemitteln 5 zugeordnet sein.

Beispielhaft sind hier jeweils nur ein Umfeldsensor 1 und ein Beschleunigungssensor 2 dargestellt. Es ist jedoch möglich, dass mehr als ein Umfeldsensor 1 und ein Beschleunigungssensor 2 eingesetzt werden. Hier sind die beiden Sensoren 1 und 2 ausgelagert vom Steuergerät angeordnet. Hier ist insbesondere auch eine unidirektionale Datenübertragung von den Sensoren 1 und 2 zum Steuergerät 3 vorgesehen. Dabei kann diese Leitung auch zur Energieversorgung der Sensoren 1 und 2 durch das Steuergerät 3 dienen. Der Umfeldsensor 1 ist beispielsweise ein Radar- oder Ultraschallsensor und vorzugsweise an der Fahrzeugfront angeordnet. Es ist möglich, dass zusätzlich weitere Umfeldsensoren an der Fahrzeugkarosserie angeordnet sind, um eine komplette Umfeldsensierung um das Fahrzeug zu ermöglichen. Mit einem Radar- oder Ultraschallsensor ist es insbesondere möglich, die Geschwindigkeit eines detektierten Objekts zu bestimmen. Der Beschleunigungssensor 2 dient als ein Aufprallsensor, d.h. erst, wenn es zu einem Aufprall kommt, registriert der Beschleunigungssensor 2 eine signifikante Beschleunigung, wobei aus dieser Beschleunigung durch einfache Integration der Geschwindigkeitsabbau bestimmt werden kann und durch zweifache Integration die Vorverlagerung. Bei einem Pfahlcrash tritt dann eine signifikante Vorverlagerung auf, wenn der Pfahl den Motorblock trifft, die für den Insassen ohne Einsatz von Rückhaltemitteln gesundheitsgefährdend sein kann. Daher ist bei einem solchen Pfahlcrash der Einsatz von Rückhaltemitteln zu einem geeigneten Zeitpunkt notwendig.

Ein Beschleunigungssensor kann zusätzlich oder anstatt auch im Steuergerät 3 selbst angeordnet sein. Neben dem Beschleunigungssensor 2 ist es möglich, auch andere Sensoren zur Aufprallsensierung zu verwenden. Dazu gehören insbesondere Verformungssensoren oder auch indirekte Verformungssensoren wie Temperatur- oder Drucksensoren. Das Steuergerät 3 ist üblicherweise zentral im Fahrzeug angeordnet, beispielsweise auf dem Fahrzeugtunnel. Es ist jedoch möglich, dieses Steuergerät den einzelnen Sensoren jeweils zuzuordnen, wobei dann dieses Steuergerät mit einem anderen Steuergerät kommuniziert, beispielsweise über einen Fahrzeugbus, das dann die Rückhaltemittel 5 ansteuert.

Figur 3 visualisiert den Algorithmus, der auf dem Prozessor 3 abläuft. In Verfahrensschritt 100 ermitteln die Sensoren 1 und 2 die Aufprallgeschwindigkeit bzw. die auftretende Beschleunigung. Durch die Integration des Beschleunigungssignals wird der Geschwindigkeitsabbau bzw. die Vorverlagerung berechnet. Daraus ergibt sich insbesondere der Vorteil, dass hochfrequente Anteile aus dem Signal gefiltert werden. Das Vorverlagerungssignal ist besonders robustest und ist daher vorzugsweise einzusetzen. Ziel des erfindungsgemäßen Verfahrens ist es, einen Pfahlcrash korrekt zu erkennen und von einem schnelleren Crash auf eine weichere Barriere wie einem anderen Fahrzeug zu unterscheiden. Der Pfahlcrash hat bis zum Auslösezeitpunkt eine geringere Vorverlagerung als der schnellere und weichere Crash. Somit liegt der Pfahlcrash, wie in Figur 2 dargestellt, und zwar mit der Kurve 12, noch weiter oberhalb der Auslöseschwelle 13 als der nicht auslösende schnellere weichere Crash 11. In Figur 2 ist dabei ein Weg-Zeit-Diagramm dargestellt. Es wird hier das zweifache Integral der Beschleunigung verwendet. Die Schwelle 13 ist von der gemessenen Aufprallgeschwindigkeit abhängig.

In Verfahrensschritt 100 wird nun das Verfahren durchgeführt und der Schwellwertvergleich gemäß Figur 2 durchgeführt. Der Pfahlcrash hat bis zu dem Auslösezeitpunkt eine geringere Vorverlagerung als der schnellere und weichere Crash. Somit liegt der Pfahlcrash 11 wie in Fig. 2 gezeigt noch weiter oberhalb der Auslöseschwelle 12 als der nichtauslösende schnellere und weichere Crash 13. Der Pfahlcrash würde daher auch als Nichtauslöser klassifiziert. Daher muss in Verfahrensschritt 101 ein zusätzliches Auslösekriterium abgeleitet werden. Dieser Überlegung liegt die Tatsache zugrunde, dass bei einem Pfahlcrash eine starke Verzögerung auftritt, wenn der Motorblock getroffen wird. Die Aufprallgeschwindigkeit und der Abstand zwischen Stoßstange und Motorblock sind bekannt und daher kann die Zeitdauer, die von dem ersten Crashkontakt vergeht, bis der Pfahl den Motorblock trifft, über die Beziehung Zeitdauer = Abstand/Aufprallgeschwindigkeit berechnet werden. Etwa zu diesem Zeitpunkt muss eine deutliche Verzögerung bzw. eine deutliche Zunahme in der Vorverlagerung zu verzeichnen sein. Dann ist ein Pfahlcrash erkannt worden und die Rückhaltemittel sind entsprechend auszulösen. Dies ermöglicht eine sehr genaue Auslösung des Pfahlcrashes. Dieser Vergleich wird in Verfahrensschritt 102 durchgeführt. Hier wird überprüft, ob es zu einer Vorverlagerung zu diesem Zeitpunkt kommt. Ist das der Fall, dann wird zu Verfahrensschritt 103 gesprungen, und die Rückhaltemittel 5 werden entsprechend ausgelöst. Ist das nicht der Fall, dann wird zu Verfahrensschritt 100 zurückgesprungen.

## Patentansprüche

1. Vorrichtung zur Erkennung eines Pfahlcrashs mit wenigstens einem Umfeldsensor (1) zur Ermittlung einer Aufprallgeschwindigkeit und wenigstens einem Aufprallsensor (2) zur Ermittlung einer beim Aufprall auftretenden Beschleunigung, wobei ein Prozessor (4) derart konfiguriert ist, dass der Prozessor (4) anhand der Aufprallgeschwindigkeit und der Beschleunigung den Pfahlcrash erkennt und in Abhängigkeit davon Rückhaltemittel (5) ansteuert, **dadurch gekennzeichnet, dass** der Prozessor (4) derart konfiguriert ist, dass der Prozessor (4) eine Zeit vom Aufprall bis zum Auftreffen eines Aufprallobjekts mit einem Motorblock anhand der Aufprallgeschwindigkeit und der Beschleunigung bestimmt, wobei der Prozessor (4) in Abhängigkeit von der Zeit den Pfahlcrash bestimmt.

2. Vorrichtung nach Anspruch 1, **dadurch gekennzeichnet, dass** der wenigstens ein Umfeldsensor (1) als Radarsensor ausgebildet ist.

3. Vorrichtung nach Anspruch 1, **dadurch gekennzeichnet, dass** der wenigstens ein Umfeldsensor (1) als Ultraschallsensor ausgebildet ist.

## Claims

1. Device for detecting a crash against a post, having at least one surrounding sensor (1) for determining an impact speed and at least one impact sensor (2) for determining an acceleration which occurs during the impact, wherein a processor (4) is configured in such a way that the processor (4) detects the crash against a post as a function of the impact speed and the acceleration, and actuates restraining means (5) as a function thereof, **characterized in that** the processor (4) is configured in such a way that the processor (4) determines a time from the impact up to the occurrence of an impact object with an engine block on the basis of the impact speed and the acceleration, wherein the processor (4) determines the crash against a post as a function of the time.

2. Device according to Claim 1, **characterized in that** the at least one surrounding sensor (1) is embodied as a radar sensor.

3. Device according to Claim 1, **characterized in that** the at least one surrounding sensor (1) is embodied as an ultrasonic sensor.

## Revendications

1. Dispositif de détection d'une collision avec un poteau, qui présente au moins un détecteur d'environnement (1) qui détermine la vitesse de collision et au moins un détecteur de collision (2) qui détermine l'accélération qui survient lors de la collision, un processeur (4) étant configuré de telle sorte que le processeur (4) détecte la collision avec le poteau à l'aide de la vitesse de collision et de l'accélération et commande un moyen (5) de retenue en fonction de ces valeurs,
**caractérisé en ce que**
le processeur (4) est configuré de telle sorte que le processeur (4) détermine à l'aide de la vitesse de collision et de l'accélération l'instant de la collision jusqu'au contact de l'objet de collision avec le bloc moteur, le processeur (4) déterminant la collision avec le poteau en fonction du temps.

2. Dispositif selon la revendication 1, **caractérisé en ce que** le ou les détecteurs d'environnement (1) sont configurés comme détecteurs radar.

3. Dispositif selon la revendication 1, **caractérisé en ce que** le ou les détecteurs d'environnement (1) sont configurés comme détecteurs à ultrasons.
